(19) Europäisches Patentamt
European Patent Office
Office européen des brevets

(11) Numéro de publication: **0 265 299 B1**

(12) **FASCICULE DE BREVET EUROPEEN**

(45) Date de publication de fascicule du brevet: **04.03.92**

(51) Int. Cl.5: **C08F 2/38**, C08J 9/20, C08F 12/04, C08K 5/09

(21) Numéro de dépôt: **87402019.1**

(22) Date de dépôt: **10.09.87**

(54) **Procédé de polymérisation de compositions de polymères de styrène en suspension aqueuse en présence d'acides résiniques de la colophane et de leurs sels.**

(30) Priorité: **17.09.86 FR 8613006**

(43) Date de publication de la demande:
**27.04.88 Bulletin 88/17**

(45) Mention de la délivrance du brevet:
**04.03.92 Bulletin 92/10**

(84) Etats contractants désignés:
**AT BE CH DE ES FR GB GR IT LI LU NL SE**

(56) Documents cités:
**DE-A- 1 926 480**
**DE-A- 2 638 839**
**FR-A- 2 265 811**
**US-A- 3 526 605**

(73) Titulaire: **ATOCHEM**
**4 & 8, Cours Michelet La Défense 10**
**F-92800 Puteaux(FR)**

(72) Inventeur: **Lozachmeur, Didier**
**10, Rue Winston Churchill**
**F-60200 Compiègne(FR)**

(74) Mandataire: **Rochet, Michel et al**
**ATOCHEM Département Propriété Industrielle 4, Cours Michelet La Défense 10 Cedex 42**
**F-92091 Paris-La-Défense(FR)**

EP 0 265 299 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne un procédé de polymérisation de compositions de polymères de styrène en suspension aqueuse en présence d'acides résiniques de la colophane et de leurs sels

Dans la présente demande on entendra par compositions de styrène les homopolymères des monomères vinylaromatiques tels que styrène, alpha-méthylstyrène, isopropylstyrène, t-butylstyrène, éthylvinylbenzène, vinyltoluène, vinylxylène, chloro- et bromo-styrènes, ainsi que les copolymères de ces monomères vinylaromatiques entre eux ou avec des proportions inférieures à 50% en poids d'au moins un autre monomère copolymérisable comme, par exemple, les nitriles acryliques et méthacryliques, les acrylates et méthacrylates d'alcoyle dont le groupe alcoyle possède 1 à 10 atomes de carbone et/ou un monomère réticulant comme le divinylbenzène en faibles proportions ne dépassant pas 5% en poids.

La polymérisation du styrène en suspension aqueuse est de façon connue menée en présence d'un système de mise en suspension du styrène qui peut être soit un stabilisateur de mise en suspension organique tel que l'alcool polyvinylique, l'hydroxyéthyl-cellulose, la polyvinylpyrrolidone, soit un agent de mise en suspension minéral comme le phosphate tricalcique, la bentonite ou le talc auquel est associé un extendeur. Selon une théorie généralement admise l'agent de mise en suspension minéral forme une barrière autour des gouttelettes de styrène et évite leur coalescence. Mais l'agent minéral est hydrophile et a tendance à rester dispersé dans l'eau de suspension. L'agent extendeur a pour fonction d'attirer les particules de substance minérale autour de la gouttelette de styrène.

La société déposante a constaté que les acides résiniques de la colophane et leurs sels du groupe IIa de la classification périodique des éléments sont des agents extendeurs.

L'objet de la présente invention est un procédé de fabrication de compositions polymères à base de styrène, procédé selon lequel on forme une suspension aqueuse de styrène à l'aide d'un système de mise en suspension comportant un agent minéral et un extendeur et on polymérise, puis on sépare, on sèche et on tamise les particules obtenues caractérisé par le fait que l'agent extendeur est un additif consistant en au moins une substance choisie dans le groupe formé par les acides résiniques de la colophane et leurs sels des métaux appartenant au groupe IIa de la classification périodique des éléments.

Dans le US-A 3 526 605 est décrit un procédé de fabrication de polystyrène expansible présentant une température de moulage particulièrement basse et de bonnes propriétés de fusion. Selon le procédé, des dérivés de colophane sont ajoutés après la polymérisation pour améliorer la température de moulage et dans ce cas les dérivés de colophane doivent être ajoutés à des concentrations de 0,5 à 2,5 % par rapport au polymère.

Dans le FR-A 2 265 811 est décrit un procédé de fabrication de polystyrène expansible dans lequel le polystyrène est mis, après polymérisation, en contact avec un agent de suspension constitué de carbonate de calcium traité par un dérivé de la colophane.

Dans le DE-A 2 638 839 est décrit un procédé de polymérisation du styrène en présence de tensioactifs utilisables comme extendeurs, mais en aucun cas ne sont suggérés comme tels les acides résiniques de la colophane et leurs sels du groupe IIa dont le but est l'amélioration de l'état de surface des objets moulés en polystyrène expansé.

Dans le DE-A 1 926 480 est décrit un procédé de polymérisation en émulsion aqueuse de styrène dans lequel est utilisé comme émulsifiant un produit de réaction d'un p-alcoylphénol possédant 8 à 15 carbones avec 15 moles d'oxyde d'éthylène auquel accessoirement peut être associé comme émulsifiant l'acide abiétique ou ses sels.

Les principaux acides résiniques de la colophane sont les acides abiétique, néoabiétique et dextropimarique ayant respectivement les formules suivantes.

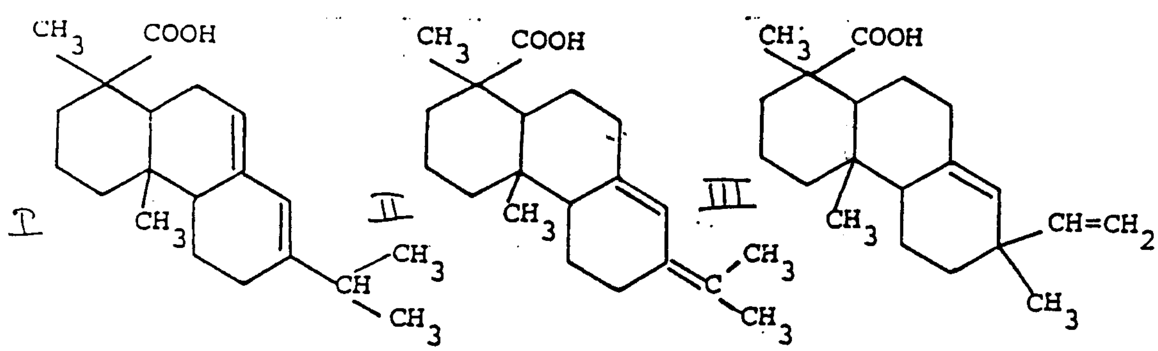
I II III

et/ou les formes oligomères de ces acides.

On utilise par exemple des mélanges d'acides résiniques ayant, en moles, la composition suivante :

- monomères : environ 70 à 80%
- dimères : environ 10 à 30%
- trimères : de l'ordre de 1%

Les mélanges d'acides résiniques salifiés au moins partiellement peuvent également renfermer des composés résultant de pontages ou associations dus au fait que les sels des métaux du groupe IIa sont divalents.

Les sels d'acides résiniques sont plus particulièrement des sels de magnésium et encore plus particulièrement des sels de calcium.

On introduit l'extendeur à un taux compris entre 1 et 5000 ppm, en particulier entre 10 et 1000 ppm par rapport au polymère de styrène. Il faut noter qu'à des doses supérieures à 5000 ppm par rapport au polymère de styrène les acides résiniques dérivés de la colophane n'ont plus d'action comme extendeur.

Conformément à la présent e invention l'extendeur est ajouté avant la fin de la polymérisation. Il est introduit au moment du chargement des réactifs, ou encore au début de la polymérisation alors que le taux de conversion n'a pas dépassé 80% de préférence 50%. On peut l'ajouter en même temps ou après l'agent de mise en suspension minérale, en une ou plusieurs doses successives.

La polymérisation peut être effectuée de façon connue en présence d'initiateurs de radicaux libres tels que des peroxydes organiques (par exemple peroxyde de benzoyle et perbenzoate de t-butyle) ou encore l'azobis-isobutyronitrile.

D'autre part il est connu de fabriquer des billes de polystyrène expansibles par polymérisation en suspension aqueuse. Dans ce cas on introduit dans le mélange réactionnel au cours de la polymérisation ou à la fin de la polymérisation un agent porogène ou agent d'expansion liquide ou gazeux.

Comme agents porogènes on peut citer plus particulièrement les hydrocarbures aliphatiques contenant 3 à 8 atomes de carbone tels que le propane, le butane, le pentane, l'hexane, l'heptane, le cyclohexane, leurs isomères et leurs mélanges comme l'éther de pétrole. On peut également citer les hydrocarbures aliphatiques halogénés et plus particulièrement chlorofluorés dont la température d'ébullition est inférieure à la température de ramollissement du polymère tels que le chlorure de méthylène, le dichoromonofluorométhane ou le dichlorodifluorométhane. Ces composés sont inclus seuls ou en mélange dans les particules de polymère expansible obtenu en quantités comprises entre 3 et 20% en poids par rapport au polymère de styrène.

Le polymère expansible obtenu est soumis à une préexpansion dans un récipient soit ouvert, soit fermé au moyen de vapeur d'eau jusqu'à ce qu'il atteigne une densité apparente prédéterminée.

Entre la polymérisation et la préexpansion les particules de polymère expansible subissent, en général, un traitement de surface, par exemple avec un stéarate dont le but principal est d'éviter le mottage pour faciliter la préexpansion.

Ensuite les particules de polymère de styrène préexpansées sont introduites dans un moule (non étanche aux gaz), à une température supérieure au point d'ébullition de l'agent porogène, jusqu'à ce qu'on obtienne un article formé de faible densité. Jusqu'à présent les agents extendeurs utilisés donnaient des produits expansés de faible cellularité. Cependant les produits obtenus ont un défaut : l'aspect de surface des produits moulés n'est pas bon ce qui est gênant lorsque l'aspect de surface est important comme par exemple pour des emballages de présentation.

La société déposante a également découvert que l'addition d'acides résiniques de la colophane ou de leurs sels des métaux du groupe IIa de la classification périodique des éléments au mélange de polymérisation améliorait de façon remarquable l'aspect de surface des articles en polystyrène expansé moulé.

Il faut remarquer que dans ce cas les acides résiniques de la colophane et leurs sels servent à la fois d'agent extendeur et d'agent de surface des produits moulés.

Il semble que l'obtention de ce bon aspect de surface soit dû à l'existence, à la surface des particules expansées, d'un grand nombre de grosses cellules éclatées, ce qui diminue la brillance des articles moulés et masque leurs défauts à une observation visuelle. D'autre part il faut noter que la cellularité à coeur et à la périphérie sont voisines.

Le diamètre moyen des particules obtenues par polymérisation de styrène en suspension aqueuse est généralement compris entre 0,1 et 5mm, de préférence entre 0,2 et 3mm dans le cas du polystyrène expansible.

Par ailleurs les compositons polymériques peuvent contenir d'autres additifs tels que des agents extincteurs de flamme ou ignifugeants, des charges organiques ou minérales, des colorants, des pigments, des agents antistatiques, des agents plastifiants.

Les exemples donnés ci-dessous permettront de mieux comprendre l'invention.

**EXEMPLE 1** (comparatif)

Dans un autoclave agité en acier inoxydable de 500 litres de capacité nominale ou introduit :
200 kg d'eau déminéralisée
200 kg de styrène
5,80 g de peroxyde de benzoyle à 75% de matière active
200 g de perbenzoate de tertrobutyle.

On agite l'ensemble on chauffe la suspension ainsi obtenu jusqu'à 90°C puis on maintient cette température pendant une heure.

On introduit alors 440g de phosphate tricalcique et on maintient le mélange à 90°C. Au bout de 2h30 il n'y a plus de suspension. Il y a décantation de la phase organique et par conséquent plus de formation de perles.

**EXEMPLE 2.**

On opère comme dans l'exemple 1 sauf que l'on introduit en deux fois 440g de phosphate tricalcique puis, sous forme de solution à 20% dans le styrène 20g, d'un mélange d'acides résiniques dérivés de la colophane et de leurs sels de calcium commercialisé sous la marque URAPRINT 62 126 par la société DSM.

Au bout de 5 heures on ferme automatiquement l'autoclave, on ajoute 8% de pentane par rapport à la masse de polymère. Au cours de cette imprégnation la température est portée a 130°C et maintenue pendant 1 heure. L'autoclave est ensuite refroidi jusqu'à 30°C. Les perles obtenues sont essorées puis tamisées entre 0,8 et 1,3mm. Le produit tamisé subit alors un traitement de surface dans un mélangeur. Au bout de 5 jours de stockage, le produit est préexpansé à environ 20g/l dans un expanseur à vapeur et on procède au moulage de caisses pour évaluation.

**EXEMPLE 3**

On opère comme dans l'exemple 2 sauf que le résinate est remplacé par 6ppm par rapport à la masse totale d'une solution de persulfate de potassium à 10g/l.

Le tableau ci-dessous donne une analyse comparative de l'aspect de surface des surfaces des caisses finies par détermination de la brillance, observation de clichés de microscopie de balayage (HEB) sur une lamelle de polystyrène et observation visuelle.

TABLEAU

| Polymère expansé | Cellularité | |
|---|---|---|
| | à coeur | à la périphérie |
| Exemple 2 | 250μ | 210μ |
| Exemple 3 | 140-190μ | 100μ |
| | Brillance | Observation visuelle |
| Exemple 2 | 7,7 | Bon aspect de surface |
| Exemple 3 | 8,4 | Mauvais aspect de surface |

* La brillance est mesurée par reflectométrie sous un angle d'incidence de 60° au moyen d'un réflectomètre GARDNER selon la norme ASTM-D523.

## Revendications

1. Procédé de fabrication de compositions polymères à base de styrène selon lequel on forme une suspension aqueuse de styrène à l'aide d'un système de mise en suspension comportant un agent minéral et un extendeur, on polymérise, puis on sépare, on sèche et on tamise les particules de polymères obtenues caractérisé par le fait que l'agent extendeur, introduit à un taux de 1 à 5000 ppm par rapport au polymère de styrène avant que le taux de conversion de polymérisation ait dépassé 80 %, est un additif consistant en au moins une substance choisie dans le groupe formé par les acides résiniques de la colophane et leurs sels des métaux appartenant au groupe IIa de la Classification Périodique des Eléments.

2. Procédé de fabrication de compositions polymères à base de styrène selon la revendication 1 caractérisé par le fait que les sels d'acides résiniques sont des sels de magnésium.

3. Procédé de fabrication de compositions de polymères à base de styrène selon la revendication 1 caractérisé par le fait que les sels d'acides résiniques sont des sels de calcium.

4. Procédé de fabrication de compositions de polymères à base de styrène selon l'une quelconque des revendications de 1 à 3 caractérisé par le fait que les acides résiniques ou leurs sels de métaux appartenant au groupe IIa de la Classification Périodique des Eléments sont introduits à un taux compris entre 10 et 1000 ppm par rapport au polymère de styrène.

5. Procédé de fabrication de compositions de polymères à base de styrène selon l'une quelconque des revendications 1 à 4 caractérisé par le fait que les acides résiniques ou leurs sels de métaux sont introduits avant la fin de la polymérisation, avant que le taux de conversion ait dépassé 50 %.

## Claims

1. A process for manufacturing polymer compositions based on styrene in which an aqueous suspension of styrene is produced by means of a suspension forming system comprising a mineral agent and an extender, the styrene is polymerised and the resultant polymer particles are then separated, dried and

screened, characterized in that the extender, which is added in an amount of 1 to 5000 ppm relative to the styrene polymer before the extent of conversion to polymer has exceeded 80%, is an additive consisting of at least one substance chosen from the group comprised by the resin acids of colophony and salts thereof with metals of Group IIa of the Periodic Classification of Elements.

**2.** A process for manufacturing polymer compositions based on styrene according to claim 1, characterized in that the salts of the resin acids are magnesium salts.

**3.** A process for manufacturing polymer compositions based on styrene according to claim 1, characterized in that the salts of the resin acids are calcium salts.

**4.** A process for manufacturing polymer compositions based on styrene according to any one of claims 1 to 3, characterized in that the resin acids or salts thereof with metals belonging to Group IIa of the Periodic Classification of Elements are added in an amount of from 10 to 1000 ppm relative to the styrene polymer.

**5.** A process for manufacturing polymer compositions based on styrene according to any one of claims 1 to 4, characterized in that the said resin acids or salts thereof are added before the end of the polymerisation before the extent of conversion has exceeded 50%.

**Patentansprüche**

**1.** Verfahren zur Herstellung von Polymerverbindungen auf Basis von Styrol, bei dem man mit Hilfe eines suspendierenden Systems aus einem mineralischen Mittel und einem Streckmittel eine wässrige Styrol-Suspension bildet, polymerisiert, dann trennt, trocknet und die erhaltenen Polymerpartikel siebt, dadurch gekennzeichnet, daß das Streckungsmittel, bevor der Umsatz 80% überschritten hat, in einer Menge von 1 bis 5000 ppm, bezogen auf das Styrolpolymere, zugegeben wird, ein Zusatz ist, der aus wenigstens einer Substanz besteht, die aus der Gruppe der Colophoniumharzsäuren und ihrer Salze mit Metallen aus der Gruppe IIa des Periodensystems der Elemente ausgewählt ist.

**2.** Verfahren zur Herstellung von Polymerverbindungen auf Basis von Styrol nach Anspruch 1, dadurch gekennzeichnet, daß die Salze der Harzsäuren Magnesiumsalze sind.

**3.** Verfahren zur Herstellung von Polymerverbindungen auf Basis von Styrol nach Anspruch 1, dadurch gekennzeichnet, daß die Salze der Harzsäuren Calciumsalze sind.

**4.** Verfahren zur Herstellung von Polymerverbindungen auf Basis von Styrol nach einem der Ansprüche 1 bis 3, dadurch gekennzeichnet, daß die Harzsäuren oder ihre Salze mit Metallen aus der Gruppe IIa des Periodensystems der Elemente in einer Menge zwischen 10 und 1000 ppm, bezogen auf das Styrolpolymere, zugegeben werden.

**5.** Verfahren zur Herstellung von Polymerverbindungen auf Basis von Styrol nach einem der Ansprüche 1 bis 4, dadurch gekennzeichnet, daß die Harzsäuren oder ihre Metallsalze vor dem Ende der Polymerisation, bevor der Umsatz 50% überschritten hat, zugegeben werden.